# EUROPÄISCHE PATENTANMELDUNG

(11) **EP 2 447 618 A2**
(43) Veröffentlichungstag der Anmeldung: **02.05.2012**
(21) Anmeldenummer: 11185052.5
(22) Anmeldetag: 13.10.2011
(51) Int. Cl.: F24H 1/18, F16L 59/10, F16L 59/02

(54) **Manschette für eine wärmeisolierende Umkleidung mit einer Verriegelungseinrichtung**

(30) Priorität: 26.10.2010 DE 202010014739 U
(71) Anmelder: Ten Cate Enbi GmbH, 51379 Leverkusen (DE)
(72) Erfinder: Gollan, Jürgen, 51467 Bergisch Gladbach (DE)
(74) Vertreter: Lippert, Stachow & Partner

(57) **Zusammenfassung**

Die Erfindung betrifft eine Manschette aus zugfestem Material zum Umschließen einer wärmeisolierenden Umkleidung (2) eines Körpers, insbesondere einer aus Faservliesmaterial bestehenden Umkleidung eines im Wesentlichen zylindrischen Warmwasserspeichers, mit einer Verriegelungseinrichtung zum Verbinden der freien Ränder der Manschette (1) entlang einer Mantellinie der Manschette, wobei die Verriegelungseinrichtung eine an dem einen Rand der Manschette befestigte Hakenleiste (5) und eine an dem gegenüberliegenden Rand der Manschette (1) befestigte Konterhakenleiste (6) aufweist und die Hakenleiste (5) und die Konterhakenleiste (6) miteinander verriegelbar sind, um die Manschette (1) auf der wärmeisolierenden Umkleidung (2) zu fixieren. Bei einer solchen Manschette soll erreicht werden, dass deren Ränder sich zuverlässig miteinander verriegeln lassen, ohne dass die Gefahr besteht, dass sich die Verriegelungseinrichtung unbeabsichtigt öffnet. Dies wird dadurch erreicht, dass die Hakenleiste (5) mit einem etwa radial nach außen gerichteten Haltesteg (13) versehen ist, dass der Haltesteg (13) eine vom gegenüberliegenden freien Rand der Manschette (1) weg weisende, hinterschnittene Rastnase (14) aufweist, dass die Konterhakenleiste (6) mit einem die Rastnase (14) der Hakenleiste (5) umgreifenden Hakenprofil (15) versehen ist, dass an der Hakenleiste (5) jenseits der Rastnase (14) auf der zu dem gegenüberliegenden Rand (3) der Manschette (1) weisenden Seite eine Feder (16) vorgesehen ist und dass an der Konterhakenleiste (6) eine Anlagefläche (17) ausgebildet ist, an der die Feder (16) unter Spannung zur Anlage kommt.

## Beschreibung

Die Erfindung betrifft eine Manschette aus zugfestem Material zum Umschließen einer wärmeisolierenden Umkleidung eines Körpers, insbesondere einer aus Faservliesmaterial bestehenden Umkleidung eines im Wesentlichen zylindrischen Warmwasserspeichers, mit einer Verriegelungseinrichtung zum Verbinden der freien Ränder der Manschette entlang einer Mantellinie der Manschette, wobei die Verriegelungseinrichtung eine an dem einen Rand der Manschette befestigte Hakenleiste und eine an dem gegenüberliegenden Rand der Manschette befestigte Konterhakenleiste aufweist und die Hakenleiste und die Konterhakenleiste miteinander verriegelbar sind, um die Manschette auf der wärmeisolierenden Umkleidung zu fixieren.

Aus dem DE-GM 29501829 ist eine Manschette mit einer Verriegelungseinrichtung bekannt, die an ihrem einen freien Rand eine Hakenleiste mit mehreren hintereinander angeordneten Hakenstegen und an ihrem anderen freien Rand eine Konterhakenleiste mit einem S-förmigen Hakenprofil aufweist, welches wahlweise hinter einen der Hakenstege einhängbar ist. Ein solcher Verriegelungsmechanismus ist nicht ausreichend stabil und kann sich bei Aufbringung eines äußeren seitlichen Druckes ungewollt lösen.

Der Erfindung liegt daher die Aufgabe zugrunde, eine Manschette zu schaffen, deren Ränder sich zuverlässig miteinander verriegeln lassen, ohne dass die Gefahr besteht, dass sich die Verriegelungseinrichtung unbeabsichtigt öffnet.

Erfindungsgemäß wird diese Aufgabe dadurch gelöst, dass die Hakenleiste mit einem etwa radial nach außen gerichteten Haltesteg versehen ist, dass der Haltesteg eine vom gegenüberliegenden freien Rand der Manschette weg weisende, hinterschnittene Rastnase aufweist, dass die Konterhakenleiste mit einem die Rastnase der Hakenleiste umgreifenden Hakenprofil versehen ist, dass an der Hakenleiste jenseits der Rastnase auf der zu dem gegenüberliegenden Rand der Manschette weisenden Seite eine Feder vorgesehen ist und dass an der Konterhakenleiste eine Anlagefläche ausgebildet ist, an der die Feder unter Spannung zur Anlage kommt.

Mit Hilfe eines solchen Verschlussprofils ist eine zuverlässige Verriegelung möglich, denn die an der Hakenleiste vorgesehene Feder, die sich an der Anlagefläche der Konterhakenleiste abstützt, sorgt für eine zuverlässige und dauerhafte Verriegelung der an dem Haltesteg vorgesehenen hinterschnittenen Rastnase hinter dem Hakenprofil der Konterhakenleiste.

Die Hakenleiste und die Konterhakenleiste sind zweckmäßig stranggepresste Teile aus Kunststoff, und zwar vorzugsweise aus elastischem Kunststoff.

Die an der Hakenleiste vorgesehene Feder ist bei einer bevorzugten Ausführungsform als Blattfeder ausgebildet. Die Blattfeder, die einstückig an die Hakenleiste angeformt sein kann, ist vorzugsweise radial nach außen gekrümmt.

Die Blattfeder hält dabei nicht nur die miteinander verriegelten Teil im dauerhaften Eingriff sondern gleichzeitig eine durchgehende Brücke zwischen den beiden aneinandergrenzenden Rändern der Manschette. Dadurch deckt der innere Bereich der Manschette auch im Bereich der Verriegelungseinrichtung die wärmeisolierende Umkleidung lückenlos ab, sodass keine ungewollten Kältebrücken entstehen.

Um die Hakenleiste und die Konterhakenleiste mit den freien Rändern der Manschette problemlos verbinden zu können, sind die beiden Leisten zweckmäßig mit über ihre gesamte Länge verlaufenden Schlitzen versehen, wobei die beiden Leisten mit diesen Schlitzen auf die freien Ränder der Manschette fest aufgesteckt sind.

Um einen festen Halt der Ränder in den Schlitzen zu gewährleisten, können die Schlitze in ihrem Innern eine Hinterschneidung aufweisen, während die freien Ränder der Manschette mit je einem umgefalzten Bereich versehen sind, der zugfest hinter der Hinterschneidung anliegt.

Ferner können die Hakenleiste und die Konterhakenleiste an ihren von den freien Rändern der Manschette entfernt angeordneten Enden etwa radial nach außen gerichtete Flansche aufweisen, auf die eine U-förmige Abdeckung aufsetzbar ist, wobei die beiden U-Schenkel der Abdeckung die Außenseiten der beiden Flansche übergreifen.

Um einen festen Sitz der Abdeckung auf den Flanschen zu erreichen, können an den Außenseiten der beiden Flansche Rastnuten vorgesehen seid, in die an den Innenseiten der U-Schenkel der Abdeckung vorgesehene Vorsprünge einschnappbar sind. Alternativ können die Rastnuten jedoch auch an den Innenseiten der U-Schenkel der Abdeckung angebracht sein, während die Außenseiten der beiden Flansche mit entsprechenden Vorsprüngen versehen sind.

Die Erfindung ist in der Zeichnung beispielhaft veranschaulicht und im Nachstehenden im Einzelnen anhand der Zeichnung beschrieben. Es zeigen:
- Fig. 1:: einen Ausschnitt einer Stirnansicht einer mit einer Verriegelungseinrichtung versehenen Manschette, die die wärmeisolierende Umkleidung eines Warmwasserspeichers umgibt,
- Fig. 2:: die Verriegelungseinrichtung in vergrößertem Maßstab,

- Fig. 3:: den Ausschnitt III aus Fig. 2 in nochmals vergrößertem Maßstab,
- Fig. 4:: die Verriegelungseinrichtung mit abgehobener Abdeckung und
- Fig. 5:: den Ausschnitt V aus Fig. 4 in vergrößertem Maßstab.

In der Zeichnung ist derjenige Abschnitt der Manschette 1 dargestellt, in welchem die freien Ränder der Manschette 1 mittels eines Verschlussprofils bzw. einer Verriegelungseinrichtung miteinander verbunden sind.

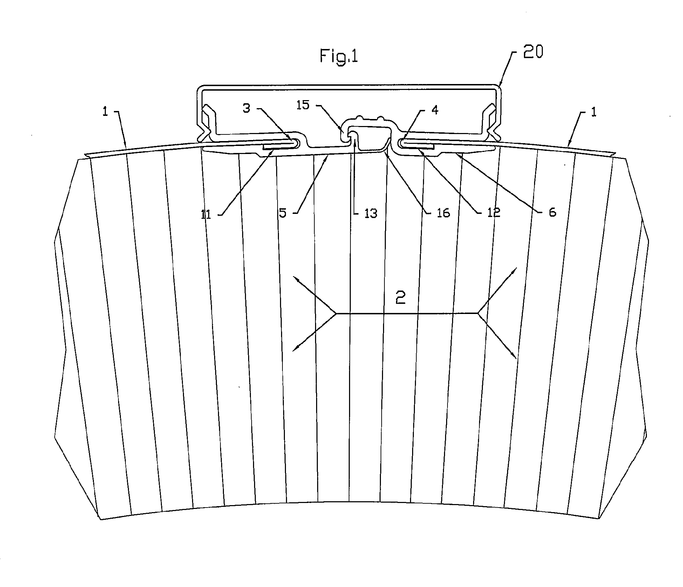

Nach Fig. 1 der Zeichnung umschließt eine Manschette 1 aus zugfestem und flexiblem Material eine wärmeisolierende Umkleidung 2, die einen in der Zeichnung nicht dargestellten Warmwasserspeicher umgibt. Die wärmeisolierenden Umkleidung 2 besteht beispielsweise aus Faservliesmaterial, welches mittels der Manschette 1 gegen den Warmwasserspeicher gedrückt wird.

Um die beiden freien Ränder 3 und 4 der Manschette 1 zuverlässig miteinander zu verbinden, weist der eine Rand 3 der Manschette 1 eine Hakenleiste 5 und der andere Rand 4 der Manschette 1 eine Konterhakenleiste 6 auf, mit denen die freien Ränder 3 und 4 der Manschette 1 zuverlässig miteinander verbunden werden können.

Die Hakenleiste 5 und die Konterhakenleiste 6 sind stranggepresste Teile aus elastischem Kunststoff.

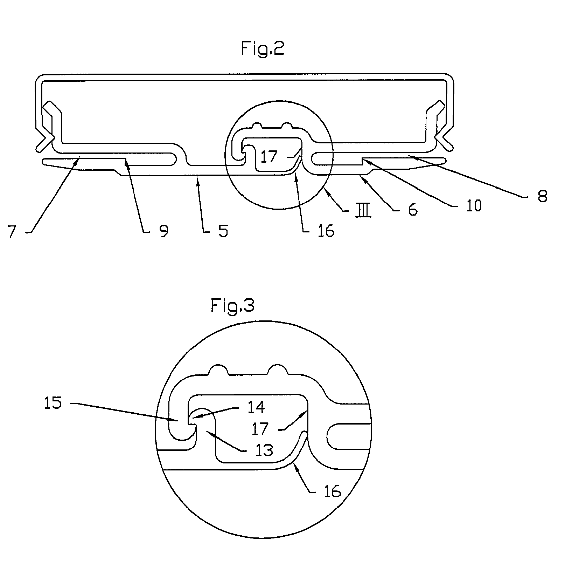

Wie insbesondere aus Fig. 1 in Verbindung mit Fig. 2 zu erkennen ist, sind beide Leisten 5 und 6 mit über ihre gesamte Länge verlaufenden Schlitzen 7 und 8 versehen, in die die freien Ränder 3 und 4 der Manschette 1 eingreifen. In ihrem Innern weisen die Schlitze 7 und 8 je eine Hinterschneidung 9 und 10 auf, während die freien Ränder 3 und 4 mit je einem umgebogenen Endbereich 11 bzw. 12 versehen sind, wobei die beiden Endbereiche 11 und 12 zugfest hinter der jeweiligen Hinterschneidung 9 bzw. 10 anliegen.

Die Hakenleiste 5 sowie die Konterhakenleiste 6 können mit einem vorteilhaften Verriegelungssystem miteinander verbunden werden.

Wie insbesondere aus den Figuren 2 und 3 zu erkennen ist, ist zu diesem Zweck an der Hakenleiste 5 ein etwa radial nach außen gerichteter Haltesteg 13 angeordnet, der eine hinterschnittene Rastnase 14 aufweist. Die Rastnase 14 ist so angeordnet, dass sie von dem gegenüberliegenden Rand 4 der Manschette 1 weg weist.

An der Konterhakenleiste 6 ist ein die Rastnase 14 umgreifendes Hakenprofil 15 angeformt, sodass eine zugfeste Verriegelung erzeugt wird.

An der Hakenleiste 5 ist ferner jenseits des Haltestegs 13 eine in Richtung des gegenüberliegenden freien Randes 4 der Manschette 1 weisende Feder 16 angeordnet. Die Feder 16 ist als Blattfeder ausgebildet und ist leicht nach außen, also von der Umkleidung weg, gekrümmt. Die Blattfeder ist einstückig an die Hakenleiste 5 angeformt.

An der Konterhakenleiste 6 ist eine Anlagefläche 17 ausgebildet, an der die Feder 16 unter Spannung zur Anlage kommt.

Aufgrund der Federspannung wird die Hakenleiste 5 von der Konterhakenleiste 6 weggedrückt, sodass die an dem Haltesteg 13 vorgesehene Rastnase 14 fest hinter dem Hakenprofil 15 verankert wird. Somit ist ein unbeabsichtigtes Lösen der Verriegelungsteile zuverlässig ausgeschlossen.

Alternativ wäre es selbstverständlich auch möglich, eine Feder an der Konterhakenleiste vorzusehen, die die Hakenleiste unter Spannung auf Abstand hält.

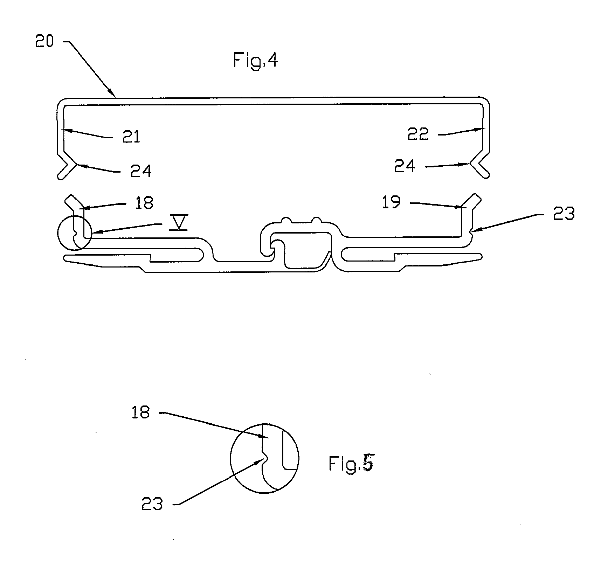

Wie insbesondere aus den Figuren 4 und 5 zu erkennen ist, sind sowohl die Hakenleiste 5 als auch die Konterhakenleiste 6 an ihren von den freien Rändern 3 und 4 der Manschette 1 weg weisenden Enden mit etwa radial nach außen gerichteten Flanschen 18 und 19 versehen, auf die eine U-förmige Abdeckung 20 aufsteckbar ist. Dabei übergreifen die beiden U-Schenkel 21 und 22 die Außenseiten der beiden Flansche 18 und 19.

Um einen festen Sitz der Abdeckung 20 auf den Flanschen 18 und 19 zu erzielen, sind die Flansche 18 und 19 an ihren Außenseiten mit Rastnuten 23 versehen, in die an den Innenseiten der U-Schenkel 21 und 22 der Abdeckung 20 angeordnete Vorsprünge 24 einschnappen.

Der Verriegelungsmechanismus der erfindungsgemäßen Manschette bietet nicht nur eine zuverlässige Halterung, die eine unbeabsichtigte Selbstöffnung ausschließt, sondern schafft darüber hinaus auch eine dichte Umhüllung der wärmeisolierenden Umkleidung, sodass keine Kältebrücken entstehen. Schließlich sind die Hakenleiste 5 und die Konterhakenleiste 6 relativ dünnwandig herstellbar, sodass auch Material eingespart werden kann. Aufgrund der Dünnwandigkeit der Teile ist es auch sehr leicht möglich, Ausbrüche zum Hindurchleiten von Armaturen anzubringen.

### Bezugszeichenliste

- 1: Manschette
- 2: wärmeisolierende Umkleidung
- 3: freier Rand der Manschette
- 4: freier Rand der Manschette
- 5: Hakenleiste
- 6: Konterhakenleiste
- 7: Schlitz
- 8: Schlitz
- 9: Hinterschneidung
- 10: Hinterschneidung
- 11: Endbereich
- 12: Endbereich
- 13: Haltesteg
- 14: Rastnase
- 15: Hakenprofil
- 16: Feder / Blattfeder
- 17: Anlagefläche
- 18: Flansch
- 19: Flansch
- 20: Abdeckung
- 21: U-Schenkel
- 22: U-Schenkel
- 23: Rastnuten
- 24: Vorsprünge

## Patentansprüche

1. Manschette aus zugfestem Material zum Umschließen einer wärmeisolierenden Umkleidung (2) eines Körpers, insbesondere einer aus Faservliesmaterial bestehenden Umkleidung eines im Wesentlichen zylindrischen Warmwasserspeichers, mit einer Verriegelungseinrichtung zum Verbinden der freien Ränder der Manschette (1) entlang einer Mantellinie der Manschette, wobei die Verriegelungseinrichtung eine an dem einen Rand der Manschette befestigte Hakenleiste (5) und eine an dem gegenüberliegenden Rand der Manschette (1) befestigte Konterhakenleiste (6) aufweist und die Hakenleiste (5) und die Konterhakenleiste (6) miteinander verriegelbar sind, um die Manschette (1) auf der wärmeisolierenden Umkleidung (2) zu fixieren, **dadurch gekennzeichnet , dass** die Hakenleiste (5) mit einem etwa radial nach außen gerichteten Haltesteg (13) versehen ist, dass der Haltesteg (13) eine vom gegenüberliegenden freien Rand der Manschette (1) weg weisende, hinterschnittene Rastnase (14) aufweist, dass die Konterhakenleiste (6) mit einem die Rastnase (14) der Hakenleiste (5) umgreifenden Hakenprofil (15) versehen ist, dass an der Hakenleiste (5) jenseits der Rastnase (14) auf der zu dem gegenüberliegenden Rand (3) der Manschette (1) weisenden Seite eine Feder (16) vorgesehen ist und dass an der Konterhakenleiste (6) eine Anlagefläche (17) ausgebildet ist, an der die Feder (16) unter Spannung zur Anlage kommt.

2. Manschette nach Anspruch 1, **dadurch gekennzeichnet, dass** die Hakenleiste (5) und die Konterhakenleiste (6) stranggepresste Teile aus Kunststoff sind.

3. Manschette nach Anspruch 2, **dadurch gekennzeichnet, dass** der Kunststoff elastisch ist.

4. Manschette nach einem der Ansprüche 1 bis 3, **dadurch gekennzeichnet , dass** die Feder (16) als Blattfeder ausgebildet ist.

5. Manschette nach Anspruch 4, **dadurch gekennzeichnet, dass** die Blattfeder (16) nach außen von der wärmeisolierenden Umkleidung weg gekrümmt ist.

6. Manschette nach Anspruch 4 oder 5, **dadurch gekennzeichnet, dass** die Blattfeder (16) einstückig an die Hakenleiste (5) angeformt ist.

7. Manschette nach einem der Ansprüche 1 bis 6, **dadurch gekennzeichnet, dass** die Hakenleiste (5) und die Konterhakenleiste (6) mit über ihre gesamte Länge verlaufenden Schlitzen (7,8) versehen sind und dass die Hakenleiste (5) und die Konterhakenleiste (6) mit diesen Schlitzen (7,8) auf die freien Ränder (3,4) der Manschette (1) fest aufgesteckt sind.

8. Manschette nach Anspruch 7, **dadurch gekennzeichnet, dass** die Schlitze (7,8) in ihrem Innern eine Hinterschneidung (9,10) aufweisen und dass die freien Ränder (3,4) der Manschette (1) mit je einem umgefalzten Endbereich (11,12) versehen sind, der zugfest hinter der jeweiligen Hinterschneidung (9,10) anliegt.

9. Manschette nach einem der Ansprüche 1 bis 8, **dadurch gekennzeichnet, dass** die Hakenleiste (5) und die Konterhakenleiste (6) im Abstand von den freien Rändern (3,4) der Manschette (1) etwa radial nach außen gerichtete Flansche (18,19) aufweisen und dass auf die beiden Flansche (18,19) eine U-förmige Abdeckung (20) aufsetzbar ist, wobei die beiden U-Schenkel (21,22) die Außenseiten der beiden Flansche der Abdeckung (20) übergreifen.

10. Manschette nach Anspruch 9, **dadurch gekennzeichnet, dass** an den Außenseiten der beiden Flansche (18,19) Rastnuten (23) vorgesehen sind, in die an den Innenseiten der U-Schenkel (21,22) der Abdeckung (20) vorgesehene Vorsprünge (24) einschnappbar sind.
